Europäisches Patentamt

**European Patent Office**

Office européen des brevets

(19)

(11) Numéro de publication: **0 192 561**
**B1**

(12) **FASCICULE DE BREVET EUROPEEN**

(45) Date de publication du fascicule du brevet:
13.06.90

(51) Int. Cl.⁵: **B60R 22/06**

(21) Numéro de dépôt: 86400294.4

(22) Date de dépôt: 11.02.86

(54) **Organe coulissant comportant un pène coopérant avec une boucle solidaire d'une ceinture de sécurité.**

(30) Priorité: 15.02.85 FR 8502232

(43) Date de publication de la demande:
27.08.86 Bulletin 86/35

(45) Mention de la délivrance du brevet:
13.06.90 Bulletin 90/24

(84) Etats contractants désignés:
DE GB IT SE

(56) Documents cités:
DE-A- 3 019 158
DE-A- 3 105 480
DE-A- 3 302 163

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Monsigny, Jean, 30 rue Zornhoff, F-67700 Saverne(FR)**

(74) Mandataire: **Moncheny, Michel et al, c/o Cabinet Lavoix 2 Place d'Estienne d'Orves, F-75441 Paris Cedex 09(FR)**

## Description

La présente invention concerne les dispositifs de ceinture de sécurité passive notamment pour véhicule automobile et elle se rapporte plus particulièrement à un perfectionnement apporté à un organe coulissant utilisé dans ces dispositifs.

On connaît des dispositifs de ceinture de sécurité passive. Ces dispositifs comprennent une sangle formant baudrier enroulée à une de ses extrémités par un enrouleur et portant à son extrémité libre une boucle qui coopère avec un pène solidaire d'un organe coulissant, se déplaçant dans un rail de guidage solidaire du véhicule.

Dans l'état de la technique, les pènes sont généralement formés d'une seule pièce avec les organes coulissants ou sont fixés rigidement sur ces organes, de sorte que les pènes font saillie approximativement à angle droit hors des rails de guidage.

Ceci présente un certain nombre d'inconvénients, notamment lorsque l'on a décroché la ceinture en désolidarisant la boucle du pène. Le pène peut alors se trouver dans une position telle qu'il présente des risques notamment de blessures d'un passager qui veut monter ou descendre du véhicule ou de sauveteurs éventuels en cas d'accident, qui après avoir décroché la ceinture, veulent sortir rapidement un passager du véhicule.

Ceux-ci risquent alors de se heurter au pène qui peut faire saillie au niveau de la tête des personnes.

Le document DE-A 3 105 480 concerne une ceinture de sécurité passive notamment pour véhicule automobile. Dans la solution proposée on utilise un organe coulissant sur lequel est articulé par l'une de ses extrémités un pène sur lequel peut venir s'accrocher une boucle solidaire de la sangle de la ceinture de sécurité. Ce document indique que l'organe coulissant se déplace dans un guide sans autre précision aucune notamment ni en ce qui concerne ce guide et ce pène ni en ce qui concerne la raison d'une telle articulation.

Le but de l'invention est de résoudre le problème précédemment indiqué à l'aide d'un dispositif du type de celui rappelé dans le document en question.

L'invention a pour objet un dispositif dont les éléments qui sont présents dans le préambule sont exposés dans ce document et dont les particularités figurent notamment dans la partie caractérisante de la revendication principale.

L'invention sera mieux comprise à l'aide de la description qui va suivre, donnée uniquement à titre d'exemple et faite en se référant aux dessins annexés, sur lesquels:

– la Fig. 1 est une vue schématique en perspective de l'habitacle d'un véhicule automobile équipé d'un dispositif de ceinture de sécurité passive;
– la Fig. 2 est une vue en coupe et en perspective d'un rail de guidage;
– la Fig. 3 est une vue de dessus d'un organe coulissant selon l'invention comportant un pène et placé dans un rail de guidage;
– la Fig. 4 est une vue en coupe selon la ligne A–A de la Fig. 3 et dans laquelle on a représenté un pène en position escamotée à l'intérieur du rail de guidage;
– la Fig. 5 est une vue en coupe suivant la ligne B–B de la Fig. 4; et
– la Fig. 6 est une vue en coupe d'un organe coulissant selon l'invention, placé dans une position particulière du rail de guidage.

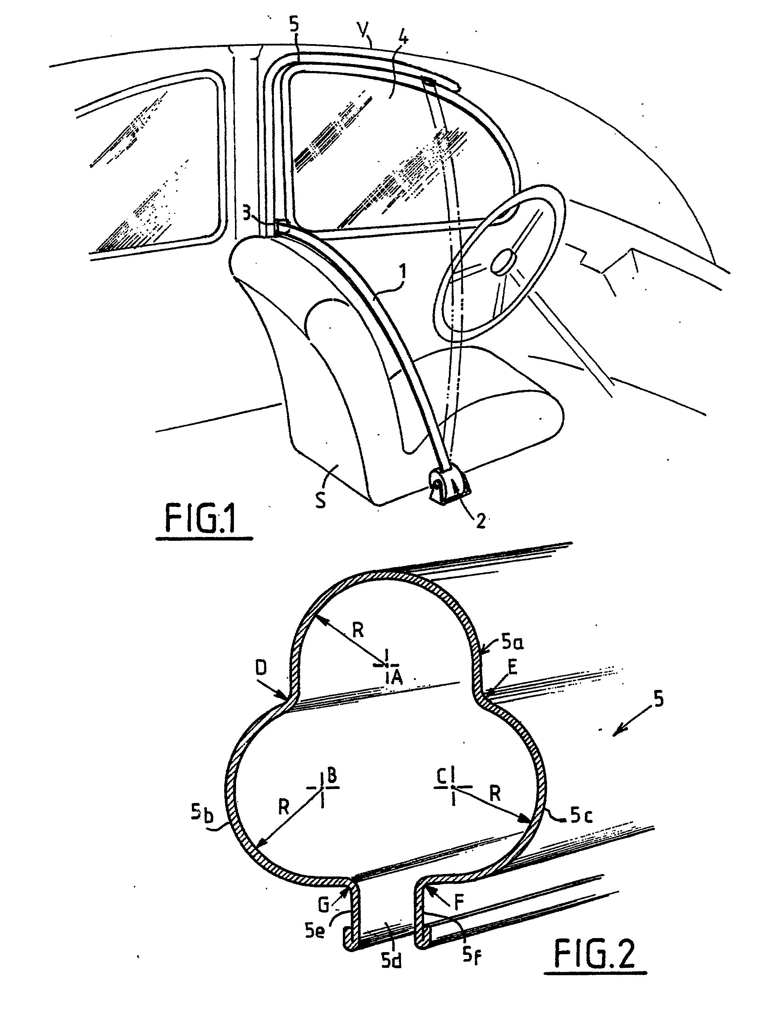

Sur la Fig. 1, on a représenté schématiquement un véhicule V dont le siège du conducteur S est équipé d'un dispositif de ceinture de sécurité passive.

La ceinture de sécurité comprend une sangle 1 formant baudrier dont une extrémité est enroulée sur un enrouleur 2 disposé du côté intérieur du siège S. A son extrémité opposée à l'enrouleur 2, la sangle 1 porte une boucle 3 qui coopère avec un pène solidaire d'un organe coulissant (non représentés) se déplaçant autour d'une porte 4 dans un rail creux 5 de guidage et de retenue dont une partie est disposée contre le montant vertical de la caisse du véhicule V et dont une autre partie est appuyée contre le bord extérieur du pavillon au-dessus de l'embrasure de la porte 4.

Il est connu que le rail de guidage 5 ne joue aucun rôle d'encaissement des efforts engendrés par exemple lors d'un accident. Le rôle de ce rail de guidage 5 se limite à un guidage et à une retenue de l'organe coulissant disposé à l'intérieur dudit rail.

Cependant, le rail de guidage doit être conçu de façon à assurer la tenue aux efforts faibles qui sont engendrés par exemple lors du déplacement de la sangle.

Ainsi qu'on peut le voir sur la Fig.2, le rail de guidage 5 se présente, sous la forme de trois parties à peu près semi-cylindriques 5 a, 5 b, 5 c de centres A, B et C respectivement et de rayons intérieurs R.

Une fente longitudinale 5 d délimitée par des rebords 5 e et 5 f faisant saillie vers l'extérieur, est ménagée au niveau de la jonction des parties semi-cylindriques 5 b et 5 c. Cette configuration présente des parties de raccordement D,E,F et G au niveau des jonctions des parties semi-cylindriques entre elles et au niveau des jonctions des parties semi-cylindriques 5 b et 5 c avec les rebords 5 e et 5 f délimitant la fente longitudinale 5 d.

En section, le rail de guidage est donc constitué par des lobes à peu près semi-circulaires.

Pour des questions d'aptitude à la fabrication par profilage à froid, ce rail est constitué d'acier ou de matériau ferreux, par exemple d'inox, d'épaisseur 0,5 mm.

Des calculs de moment d'inertie donnant l'aptitude au profilage d'une part et la rigidité voulue d'autre part, tout en permettant le cintrage du rail de guidage avec un rayon faible, par exemple au niveau du coin de la portière, conduisent, pour l'épaisseur choisie, à adopter cette section dite "en trèfle".

Des calculs ont également permis de déterminer des valeurs particulièrement avantageuses de la distance séparant les centres des trois parties semi-cylindriques constituant le "trèfle".

Ainsi, la distance entre les points A et B et la distance entre les points A et C sont avantageusement égales à 1,6 fois le rayon R (1,6.R). La distance entre les points B et C, c'est à dire les plus proches de la fente 5 $\underline{d}$ ménagée entre les deux parties semi-cylindriques 5 $\underline{b}$ et 5 $\underline{c}$, est avantageusement égale à 1,5 fois le rayon (1,5.R).

Les parties rectilignes de raccordement au niveau des jonctions des parties semi-cylindriques 5 $\underline{a}$,5 $\underline{b}$,5 $\underline{c}$ entre elles et avec la fente longitudinale 5 $\underline{d}$, c'est à dire en D,E,F et G, ont une longueur au moins égale au rayon R divisé par quatre (R/4).

Ce rail de guidage doit donc assurer la fonction de guidage d'un organe coulissant, avoir une rigidité suffisante pour supporter les efforts engendrés par le déplacement de la sangle et un poids minimum pour répondre à des critères communs dans l'industrie automobile.

Le rail de guidage est fixé sur la carrosserie du véhicule par tout moyen approprié, par exemple, au moyen d'équerres rapportées et soudées sur la caisse du véhicule.

Comme on le verra par la suite, le guidage de l'organe coulissant est assuré par les parties semi-cylindriques 5 $\underline{b}$ et 5 $\underline{c}$, tandis que la partie semi-cylindrique 5 $\underline{a}$ assure un appui pour l'organe coulissant proprement dit, qui présente une forme correspondante.

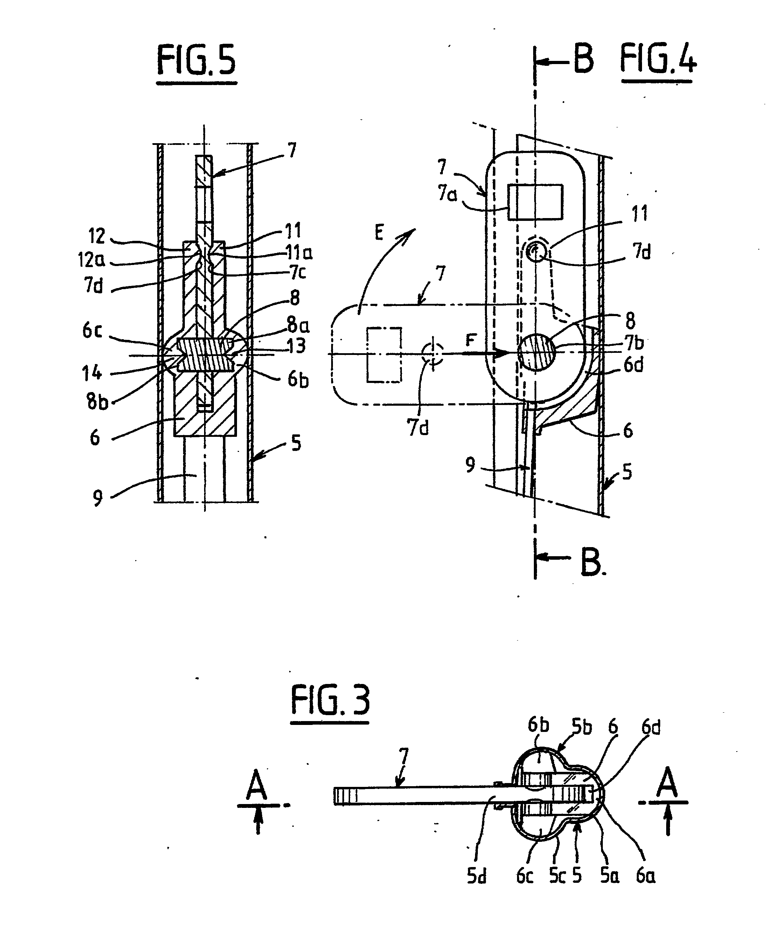

Comme il est représenté sur la Fig.3, un organe coulissant 6 est disposé à l'intérieur du rail de guidage 5. Cet organe coulissant 6 présente une surface extérieure correspondant à une configuration en "trèfle".

Comme on le verra par la suite, l'organe coulissant 6 présente deux parties semi-sphériques 6 $\underline{b}$ et 6 $\underline{c}$ disposées de part et d'autre d'un évidement central 6 $\underline{d}$ dans lequel est logé un pène 7 faisant saillie hors du rail de guidage 5 à travers la fente 5 $\underline{d}$. L'élément coulissant 6 présente également une surface arrière 6 $\underline{a}$ dont la forme sera définie par la suite venant coopérer avec la partie semi-cylindrique 5 $\underline{a}$ du rail de guidage 5.

Ainsi qu'on peut le constater, cet organe coulissant présente une surface extérieure venant coopérer avec la surface intérieure correspondante du rail de guidage. C'est ainsi que les parties semi-sphériques 6 $\underline{b}$ et 6 $\underline{c}$ de l'organe coulissant viennent s'ajuster dans les parties semi-cylindriques 5 $\underline{b}$ et 5 $\underline{c}$ du rail de guidage.

Un certain jeu fonctionnel subsiste entre les parties correspondantes, de sorte que le coulissement de l'organe coulissant dans le rail de guidage est facilité.

Si l'on se reporte maintenant à la Fig.4 qui est une vue en coupe suivant la ligne A-A de la Fig.3, et dans laquelle le pène 7 est représenté en position escamotée à l'intérieur du rail de guidage 5, on constate que le pène 7 est monté à rotation autour d'un axe 8 solidaire de l'organe coulissant 6. Le pène 7 peut donc osciller sur l'organe coulissant 6 entre une position active dans laquelle il fait saillie hors du rail de guidage et une position escamotée à l'intérieur du rail de guidage. Le pène 7 se présente sous la forme d'une plaque comportant à une extrémité, un évidement 7 $\underline{a}$ venant coopérer avec une partie correspondante d'une boucle de ceinture de sécurité (non représentée) et à l'autre extrémité un trou 7 $\underline{b}$ dans lequel est logé l'axe 8.

L'extrémité de ce pène 7 venant se loger dans l'évidement central 6 $\underline{d}$ de l'organe coulissant 6, est arrondie.

Cet organe coulissant peut être relié à tous moyens actionneurs appropriés. Ainsi par exemple, l'organe coulissant est en matière plastique et il est lié rigidement à l'extrémité d'une courroie 9 reliée à un dispositif d'actionnement (non représenté), de façon à assurer le déplacement de l'organe coulissant 6 dans le rail de guidage 5.

Cette liaison est assurée par tous moyens connus, mais peut avantageusement être réalisée par surmoulage de l'organe coulissant 6 sur la courroie 9. Les matériaux constituant ces deux éléments doivent donc être compatibles de sorte que le surmoulage produise une liaison durable et efficace.

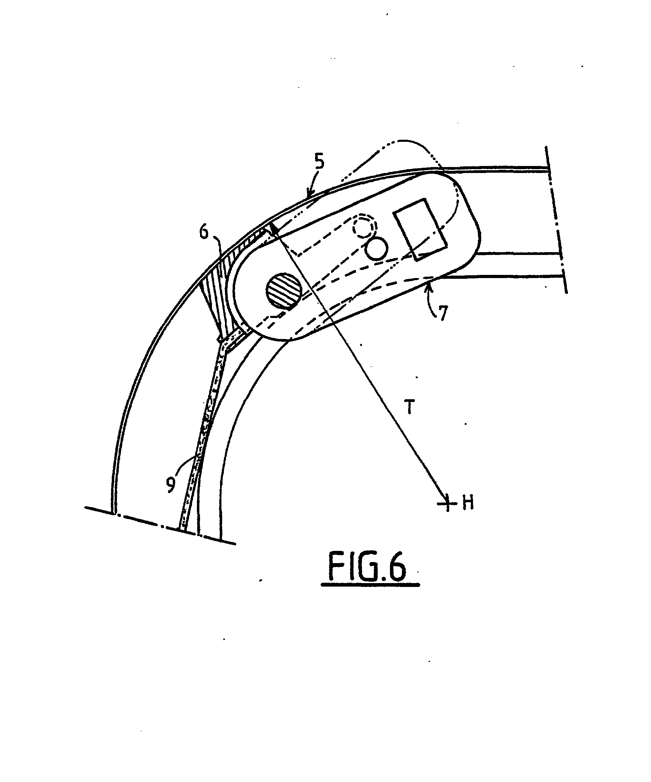

Comme on peut le voir plus clairement sur la Fig.5, l'organe coulissant 6 comporte deux bras 11 et 12, par exemple venus de matière, s'étendant au-delà de l'axe 8, à partir du corps principal de l'organe coulissant 6. A l'extrémité supérieure de ces deux branches 11 et 12 sont formés des bossages 11 $\underline{a}$ et 12 $\underline{a}$, qui peuvent être avantageusement de forme semi-sphérique, venant coopérer avec des évidements de forme correspondante 7 $\underline{c}$ et 7 $\underline{d}$ ménagés de chaque côté du pène 7.

On retrouve sur cette Fig.5, les parties semi-sphériques 6 $\underline{b}$ et 6 $\underline{c}$ de l'organe coulissant 6, qui assurent le guidage de cet organe coulissant dans le rail 5.

L'axe 8 est disposé dans l'organe coulissant au niveau des deux parties semi-sphériques 6 $\underline{b}$ et 6 $\underline{c}$ et présente à chacune de ses extrémités, des évidements 8 $\underline{a}$ et 8 $\underline{b}$, qui peuvent avantageusement être coniques. La surface intérieure de l'organe coulissant 6 présente au niveau des parties semi-sphériques précitées, des bossages 13 et 14, qui peuvent avantageusement être de forme conique, venant coopérer avec lesdits évidements 8 $\underline{a}$, 8 $\underline{b}$ de façon à maintenir l'axe 8 en position et permettre ainsi au pène 7 d'osciller sur l'organe coulissant 6.

Ainsi qu'il ressort de la description qui précède, le pène 7, qui sur la Fig.4 est représenté en traits mixtes dans sa position active, c'est à dire faisant saillie hors du rail 5, peut être amené suivant le sens indiqué par la flèche E, dans une position escamotée, représentée en trait plein sur cette Fig.4, dans laquelle le pène est logé entre les bras 11 et 12 de l'organe coulissant 6 et donc à l'intérieur du rail de guidage 5. Les bossages 11 $\underline{a}$ et 12 $\underline{a}$ coopèrent alors avec les évidements 7 $\underline{c}$ et 7 $\underline{d}$ du pène 7 de façon à bloquer ledit pène dans sa position escamotée.

Le pène 7 étant escamoté à l'intérieur du rail 5, il ne peut donc plus gêner l'accès au véhicule.

Il est à noter que la surface arrière de l'organe coulissant, c'est à dire la partie 6 $\underline{a}$ de celui-ci venant en contact avec la partie semi-cylindrique 5 $\underline{a}$ du rail de guidage présente une forme particulière.

En effet, cette surface présente :

- un premier centre A, comme on l'a déjà vu, de sorte qu'en section droite du rail de guidage, le rayon de cette partie est tel qu'il existe un jeu fonctionnel de l'ordre de 0,2 mm entre la partie 6 $\underline{a}$ de l'organe coulissant et la partie 5 $\underline{a}$ du rail de guidage;

- un second centre H (Fig.6) et un rayon inférieur à T de sorte que si T est le rayon minimum de courbure du rail de guidage correspondant par exemple au coude du rail de guidage au-dessus de la portière, le coulissement de l'organe coulissant dans le rail, est toujours possible.

Lors de l'assemblage, l'axe 8 est introduit dans le trou 7 b du pène 7, puis on introduit à force cet ensemble dans l'évidement correspondant de l'organe coulissant 6 suivant le sens indiqué par la flèche F sur la Fig.4.

Lorsque l'on veut déverrouiller le pène 7, de sa position escamotée, on déplace l'organe coulissant jusqu'à une portion courbe du rail de guidage dont le rayon de courbure est suffisant pour que le fond du rail pousse l'extrémité libre du pène 7 opposée à son articulation sur l'organe coulissant de sorte que les évidements 7 c,7 d de ce pène se dégagent des bossages 11 a, 12 a de l'organe coulissant. Ceci provoque donc un déplacement angulaire du péne. Une partie du pène sort alors légèrement du rail de guidage et il est possible de la saisir afin de libérer complètement le pène, ainsi qu'on peut le voir sur la Fig.6.

La longueur du pène est donc telle qu'elle permet un déplacement angulaire suffisant de ce pène pour qu'on puisse le saisir.

L'assemblage ainsi réalisé doit être suffisant pour assurer la tenue aux efforts engendrés par les déplacements de la sangle, mais ne participe pas à la fonction de sécurité elle-même, comme on l'a déjà mentionné.

En effet, si un effort anormal est exercé par un utilisateur sur la sangle, la position de l'axe 8 par rapport aux parties de racordement F et G du rail de guidage 5 est telle qu'une génératrice de l'axe 8 vient s'y appuyer moyennant une très faible déformation de l'ensemble.

L'élasticité propre de l'organe coulissant et la coopération des bossages 13 et 14 de cet organe avec les évidements 8 a et 8 b de l'axe 8, créent une composante qui ramène l'axe 8 en position dès la fin de l'effort anormal.

Il va de soi qu'un dispositif de rappel automatique du pène 7 dans sa position escamotée à l'intérieur du rail de guidage peut être prévu sans sortir du cadre défini par la présente invention.

Ainsi, par exemple, un ressort spiral de rappel (non représenté) peut être prévu sur l'axe 8 de façon que lorsque la boucle 3 est désolidarisée du pène 7, le pène 7 rentre automatiquement à l'intérieur du rail de guidage, dans sa position escamotée.

## Revendications

1. Dispositif de ceinture de sécurité passive comprenant un rail de guidage (5), un organe coulissant (6) monté déplaçable dans ce rail et un pène (7) qui est destiné à coopérer avec une boucle (3) solidaire d'une ceinture de sécurité et qui est monté articulé (7b, 8) par l'une de ses extrémités sur cet organe (6) de manière à pouvoir y osciller, caractérisé en ce que le rail (5) présente une fente (5d) et au moins une portion courbe dont la concavité est dirigée vers cette fente (5d), en ce que le pène (7) est monté de manière à pouvoir basculer entre une position de sécurité où il est escamoté à l'intérieur du rail et une position active où il fait saillie hors du rail par cette fente (5d) sensiblement à angle droit et présente une longueur, de cette extrémité (7b) à son extrémité opposée, qui est fonction du rayon de courbure de cette portion courbe du rail de manière que lorsque l'organe coulissant (6) se déplace avec le pène (7) en position escamotée de sécurité dans cette portion courbe l'extrémité opposée de ce dernier vienne en contact du fond du rail face à la fente (5d) pour faire basculer et saillir au moins partiellement le pène (7) hors du rail (5) vers sa position active.

2. Dispositif selon la revendication 1, caractérisé en ce qu'il comporte des moyens de maintien du pène (7) en position escamotée.

3. Dispositif selon l'une quelconque des revendications précédentes, caractérisé en ce que le pène est monté à rotation autour d'un axe (8) solidaire de l'organe coulissant (6).

4. Dispositif selon l'une quelconque des revendications précédentes, caractérisé en ce que les moyens de maintien du pène en position escamotée sont constitués par des bossages (11a, 12a) formés sur l'organe coulissant (6) et coopérant avec des évidements correspondants (7c, 7d) du pène.

5. Dispositif selon l'une quelconque des revendications précédentes, caractérisé en ce que l'axe (8) présente à chacune de ses extrémités des évidements (13, 14) coopérant avec des bossages (8a, 8b) de l'organe coulissant afin de maintenir cet axe solidaire de l'organe coulissant (6).

6. Dispositif selon la revendication 2 ou 3, caractérisé en ce que les moyens de maintien sont constitués par un ressort spiral disposé sur l'axe (8) de rotation du pène (7) assurant en outre l'escamotage automatique du pène dans le rail de guidage (5).

7. Dispositif selon l'une quelconque des revendications précédentes caractérisé en ce que le pène (7) présente un évidement (7a) pour recevoir la boucle (3) placé à proximité de cette extrémité opposée.

## Claims

1. Passive safety belt device comprising a guide rail (5), a sliding member (6) mounted to move in this rail and a bolt (7) which is intended to co-operate with a buckle (3) integral with a safety belt and which is pivotally mounted (7b, 8) by one of its ends on this member (6) in order to be able to rock there, characterised in that the rail (5) has a slot (5d) and at least one curved portion, whereof the concavity is directed towards this slot (5d), in that the bolt (7) is mounted in order to be able to tilt between a safety position where it is retracted inside the rail and an active position where it projects from the rail through this slot (5d) substantially at right angles and has a length, from this end (7b) to its opposite end, which depends on the radius of curvature of this curved portion of the rail in order that when the sliding member (6) moves with the bolt (7) into the retracted safety position in this curved portion, the opposite end of the latter comes into contact with the bottom of the rail opposite the slot (5d) in order to cause the bolt (7) to tilt and project at least partly from the rail (5) towards its active position.

2. Device according to Claim 1, characterised in that it comprises means for retaining the bolt (7) in the retracted position.

3. Device according to one of the preceding Claims, characterised in that the bolt is mounted to rotate about a pin (8) integral with the sliding member (6).

4. Device according to one of the preceding Claims, characterised in that the means for retaining the bolt in the retracted position are constituted by bosses (11a, 12a) formed on the sliding member (6) and co-operating with corresponding recesses (7c, 7d) in the bolt.

5. Device according to one of the preceding Claims, characterised in that the pin (8) comprises at each of its ends recesses (13, 14) co-operating with bosses (8a, 8b) on the sliding member in order to keep this pin integral with the sliding member (6).

6. Device according to Claim 2 or 3, characterised in that the retaining means are constituted by a coil spring disposed on the pin (6) for the rotation of the bolt (7) also ensuring the automatic retraction of the bolt into the guide rail (5).

7. Device according to one of the preceding Claims, characterised in that the bolt (7) has a recess (7a) for receiving the buckle (3) located close to this opposite end.

**Patentansprüche**

1. Passiv-Sicherheitsgurtvorrichtung, umfassend eine Führungsschiene (5), eine verschiebbare Einrichtung (6), die in der Schiene verschiebbar angeordnet ist, und einen Riegel (7), der dazu bestimmt ist, mit einer Schnalle (3) zusammenzuwirken, die mit einem Sicherheitsgurt verbunden ist, und der beweglich (7b, 8) an einem seiner Enden auf dem Organ (6) so montiert ist, so daß er Schwenkbewegungen ausführen kann, dadurch gekennzeichnet, daß die Schiene (5) einen Spalt (5d) und mindestens einen gekrümmten Teil aufweist, dessen konkave Seite gegen den Spalt (5d) gerichtet ist, und daß der Riegel (7) so angebracht ist, daß er zwischen einer Sicherheitsstellung, in der er in das Innere der Schiene eingezogen ist, und einer Aktivstellung, in der er aus der Schiene durch den Spalt (5d) im wesentlichen rechtwinklig hervortritt, schwenkbar ist, und er eine Länge von dem Ende (7b) zu seinem entgegengesetzten Ende aufweist, die von dem Krümmungsradius des gekrümmten Teils der Schiene abhängig ist, so daß, wenn die verschiebbare Einrichtung (6) sich mit dem Riegel (7) in eingezogener Sicherheitsstellung in dem gekrümmten Teil bewegt, das entgegengesetzte Ende des Riegels in Berührung mit dem Boden der Schiene gegenüber dem Spalt (5d) in Berührung kommt, so daß der Riegel (7) schwenkt und mindestens teilweise aus der Schiene (5) in Richtung auf seine Aktivstellung hervortritt.

2. Vorrichtung gemäß Anspruch 1, dadurch gekennzeichnet, daß sie Halterungen für den Riegel (7) in eingezogener Stellung aufweist.

3. Vorrichtung nach einem der vorhergehenden Ansprüche, dadurch gekennzeichnet, daß der Riegel drehbar um eine Achse (8) angebracht ist, welche an der verschiebbaren Einrichtung (6) befestigt ist.

4. Vorrichtung nach einem der vorhergehenden Ansprüche, dadurch gekennzeichnet, daß die Halterungen für den Riegel in eingezogener Stellung aus Vorsprüngen (11a, 12a) bestehen, die auf der verschiebbaren Einrichtung (6) ausgebildet sind und die mit entsprechenden Aussparungen (7c, 7d) des Riegels zusammenwirken.

5. Vorrichtung nach einem der vorhergehenden Ansprüche, dadurch gekennzeichnet, daß die Achse (8) an jedem ihrer Enden Aussparungen (13, 14) aufweist, die mit Vorsprüngen (8a, 8b) der verschiebbaren Einrichtung zusammenwirken, um die Achse an der verschiebbaren Einrichtung (6) festzuhalten.

6. Vorrichtung nach Anspruch 2 oder 3, dadurch gekennzeichnet, daß die Halterungen aus einer Spiralfeder bestehen, die auf der Rotationsachse (8) des Riegels (7) vorgesehen ist und die darüber hinaus das automatische Einziehen des Riegels in die Führungsschiene (5) gewährleistet.

7. Vorrichtung nach einem der vorhergehenden Ansprüche, dadurch gekennzeichnet, daß der Riegel (7) eine Aussparung (7a) zur Aufnahme der Schnalle (3) aufweist, welche in der Nähe des entgegengesetzten Endes angeordnet ist.

FIG.1

FIG.2

FIG.5

FIG.4

FIG.3

FIG.6